# EUROPÄISCHE PATENTSCHRIFT

(11) **EP 0 904 175 B1**
(45) Veröffentlichungstag und Bekanntmachung des Hinweises auf die Patenterteilung: **07.11.2001**
(21) Anmeldenummer: 97923028.1
(22) Anmeldetag: 08.05.1997
(51) Int. Cl.: B23Q 5/06, B23Q 39/02, B23Q 1/70

(54) **WERKZEUGMASCHINE**
MACHINE TOOL
MACHINE-OUTIL

(30) Priorität: 09.05.1996 DE 19618757
(43) Veröffentlichungstag der Anmeldung: 31.03.1999
(73) Patentinhaber: Vickers Systems, 61273 Wehrheim (DE); WITZIG & FRANK GmbH, 77652 Offenburg (DE)
(72) Erfinder: JENNEMANN, Arnold, D-35647 Waldsolms (DE); BERGMANN, Klaus, D-77654 Offenburg (DE); BAUER, Berthold, D-71706 Markgröningen (DE)
(74) Vertreter: Gleiss & Grosse
(86) Internationale Anmeldenummer: EP9702366
(87) Internationale Veröffentlichungsnummer: WO9743085

(56) Entgegenhaltungen:
- EP-A- 0 661 133
- FR-A- 2 182 630
- FR-A- 2 211 862
- FR-A- 2 223 134
- GB-A- 1 013 041
- US-A- 3 304 051
- US-A- 4 008 774
- US-A- 4 229 139
- TOOL AND MANUFACTURING ENGINEER, Bd. 59, Nr. 2, August 1967, MILWAUKEE US, Seiten 32-34, XP002039689 "Hydrostatic Drive Ups Lathe Performance"

## Beschreibung

Die Erfindung betrifft eine Werkzeugmaschine zur Bearbeitung von Werkstücken mit Werkzeugen gemäß Oberbegriff des Anspruchs 1.

Aus der GB-A-1 013 041 ist eine Werkzeugmaschine zur Bearbeitung von Werkstücken bekannt. Als Antriebseinrichtung weist diese Werkzeugmaschine eine Verdrängermaschine auf, die ein Werkzeug antreibt, das an einer in einem Spindelgehäuse gelagerten Spindelwelle angeordnet ist. Die Spindelwelle ist in einer vorderen und einer hinteren Lagereinrichtung drehbar gelagert.

Es sind auch Werkzeugmaschinen bekannt, die eine in einem Gehäuse gelagerte Spindelwelle aufweisen, die an ein Werkzeug ein Antriebsmoment überträgt. Der Antrieb der Spindelwelle erfolgt über einen Elektromotor, dessen Abtriebswelle unter Zwischenschaltung eines Getriebes ein mit der Spindelwelle drehfest verbundenes Kegelrad mit einem Antriebsmoment beaufschlagt. Die das Antriebsmoment auf die Spindelwelle übertragenden Kegelräder müssen sehr exakt zueinander ausgerichtet werden, damit deren Verschleiß, die Erwärmung des Antriebstrangs und der zu diesem benachbarten Bauteile sowie die Geräuschentwicklung der Werkzeugmaschine gering bleiben. Eine besondere Bedeutung kommt hier dem präzisen Achsabstand der Kegelräder zu, da ein zu großer oder zu kleiner Achsabstand einen hohen Verschleiß und unter Umständen eine Beschädigung des Antriebsstrangs zur Folge hat. Dies erfordert einen erheblichen fertigungstechnischen Aufwand. Zur Schmierung der Kegelräder muß eine Schmierölversorgung vorgesehen werden, die ein eigenes Leitungssystem benötigt.

Die Aufgabe der Erfindung besteht darin, eine Werkzeugmaschine der eingangs genannten Art zu schaffen, die nahezu verschleißfrei und damit im wesentlichen wartungsfrei arbeitet, wobei die mit der Werkzeugmaschine angetriebenen Werkzeuge zur Bearbeitung von Werkstücken eine genügend lange Standzeit aufweisen.

Zur Lösung der Aufgabe wird eine Werkzeugmaschine vorgeschlagen, die die in Anspruch 1 genannten Merkmale aufweist. Sie zeichnet sich dadurch aus, daß das Arbeitsmedium der hydraulisch betriebenen Verdrängermaschine, die als Antriebseinrichtung für die Spindelwelle dient, außer zum Antrieb auch zur Schmierung und Kühlung von in dem Spindelgehäuse angeordneten beweglichen Teilen verwendet wird. Außerdem zeichnet sich die erfindungsgemäße Werkzeugmaschinen dadurch aus, daß das Arbeitsmedium zur Schmierung und Kühlung eines an einer Werkzeugaufnahme befindlichen Werkzeugs eingesetzt ist, wobei die Zuführung des Arbeitsmediums über eine Bohrung, eine im Gehäuseteil angeordnete Ringnut und eine mit der Ringnut in Fluidverbindung stehende und in der Spindelwelle angeordnete Ausnehmung oder Bohrung erfolgt. Durch das für den Betrieb der Verdrängermaschine benötigte Arbeitsmedium-Kreislaufbeziehungsweise Leitungssystem wird kein zusätzlicher Schmierölkreislauf benötigt. Das bevorzugte Arbeitsmedium für die Verdrängermaschine ist ein gute Schmier- und Kühleigenschaften aufweisendes Hydrauliköl, wobei grundsätzlich alle inkompressiblen Medien einsetzbar sind. Das für die Schmierung und Kühlung der im Spindelgehäuse angeordneten beweglichen Teile vorgesehene Medium wird einfach von der ohnehin vorhandenen Hydraulikölversorgung der Verdrängermaschine mitübernommen, was zu einer Reduzierung der Herstellungskosten der Werkzeugmaschine führt. Weiterhin weist eine in einem stabilen Gehäuse angeordnete Verdrängermaschine nur geringe Laufgeräusche auf, was eine Verminderung des Betriebsgeräuschs zur Folge hat. Ferner zeichnet sich eine eine Verdrängermaschine aufweisende Antriebseinrichtung durch einen einfachen Aufbau sowie durch eine hohe Betriebssicherheit aus und ist, wegen des sehr geringen Verschleisses, praktisch wartungsfrei. Die Herstellungs- und Betriebskosten der Werkzeugmaschine sind dadurch sehr gering. Schließlich können relativ große Toleranzbereiche realisiert werden, beispielweise hinsichtlich der Anordnung des hydraulischen Leitungssystems, wodurch der Herstellungsaufwand relativ klein ist. Dadurch, daß das Arbeitsmedium der Verdrängermaschine auch zur Schmierung und Kühlung des Werkzeugs eingesetzt ist, weist dies eine gegenüber dem Stand der Technik höhere Standzeit auf. Das Arbeitsmedium der Verdrängermaschine weist also eine Mehrfach-Funktion auf, so daß in vorteilhafter Weise auf separate Kühl- und Schmiereinrichtungen verzichtet werden kann. Es muß also lediglich ein Arbeitsmedium-Kreislauf versorgt werden. Dies ermöglicht den besonders einfachen und somit kostengünstigen Aufbau der Werkzeugmaschine.

Es wird ein Ausführungsbeispiel der Werkzeugmaschine bevorzugt, das sich dadurch auszeichnet, daß die Antriebseinrichtung ausschließlich durch die Verdrängermaschine gebildet wird. Ein das Antriebsmoment übertragendes und unterschiedliche Drehzahlen an der Spindelwelle einstellendes Getriebe wird bei Verwendung einer Verdrängermaschine als Antriebseinrichtung nicht benötigt. Zur Beeinflussung der Drehzahl muß lediglich der in die Verdrängermaschine einströmende Volumenstrom und für eine Änderung des Antriebsmoments der Druck des nicht komprimierbaren Mediums variiert beziehungsweise entsprechend angepaßt werden. Der konstruktive Aufwand für eine derartige Drehzahl- und Antriebsmomenten-Regelung sind relativ gering, wodurch die Kosten der Werkzeugmaschine herabgesetzt sind.

Besonders bevorzugt wird eine Ausführungsform der Werkzeugmaschine, bei der die Antriebseinrichtung als Axialkolbenmaschine, insbesondere Taumelscheibenmaschine, ausgebildet ist, die in Relation zu ihren baulichen Abmaßen eine hohe Leistung aufweist. Ferner kann die Drehzahl der Abtriebswelle durch einen verstellbaren Winkelblock, der das Hubvolumen der Kolben verändert, einfach variiert werden. Durch die Reduzierung des benötigten Bauraums ist eine kompakte und klein bauende Werkzeugmaschine realisierbar.

Bevorzugt wird auch ein Ausführungsbeispiel der Werkzeugmaschine, bei dem die Antriebseinrichtung und das Spindelgehäuse eine Antriebseinheit ausbilden. Die Antriebseinrichtung kann an das Spindelgehäuse angeflanscht oder in dieses integriert werden, so daß eine besonders kompakte Bauform erreicht wird. Der räumliche Abstand zwischen der Antriebseinrichtung und dem Spindelgehäuse ist durch die Ausbildung der Antriebseinheit derart gering, daß auf kraft-/drehmomentübertragende Einrichtungen, beispielsweise Zahnräder, Gelenke oder dergleichen, verzichtet werden kann, indem die Spindelwelle die Abtriebswelle der Antriebseinrichtung ersetzt und unmittelbar von dieser angetrieben wird. Durch den Wegfall der verschleißbehafteten Kraftübertragungs-Einrichtungen des Antriebsstrangs ist praktisch ein schlupfloser Antrieb der Spindelwelle realisiert. Weiterhin zeichnet sich die Antriebseinheit durch eine kompakte, modulare Bauweise und durch ein relativ kleines Laufgeräusch aus, das insbesondere durch ein stabiles Spindelgehäuse und/oder stabiles Gehäuse der Antriebseinrichtung herabgesetzt ist, wodurch der durch die Werkzeugmaschine verursachte Lärmpegel reduziert ist. Durch den Zusammenschluß der Spindelwelle und der Antriebseinrichtung ist der konstruktive und fertigungstechnische Aufwand relativ einfach, so daß auch die Herstellungskosten reduziert sind.

Besonders bevorzugt wird eine Ausführungsform der Werkzeugmaschine, die sich dadurch auszeichnet, daß die Antriebseinheit in einen mehrere Antriebseinheiten tragenden Spindelkopf einsetzbar ist. An einem derartigen Spindelkopf werden zumeist unterschiedliche Werkzeuge angeordnet. Der Spindelkopf wird unter anderem in automatisierten Fertigungsbereichen, beispielsweise in einer CNC-gesteuerten Fräsmaschine, eingesetzt. Ein Werkzeugwechsel kann durch die modulare Ausbildung des Spindelgehäuses und der Antriebseinrichtung als Baugruppe in sehr kurzer Zeit durchgeführt werden, wodurch die Stillstandzeiten der Werkzeugmaschine deutlich reduziert sind. Außerdem kann für jedes Werkzeug eine Antriebseinrichtung mit einer unterschiedlichen Abtriebsdrehzahl oder Abtriebsleistung vorgesehen werden, die den Arbeitsvorgaben des jeweiligen Werkzeugs angepaßt ist. Dies vereinfacht den Steuerungsaufwand für die Werkzeugmaschine erheblich.

Weitere vorteilhafte Ausgestaltungen ergeben sich aus den übrigen Unteransprüchen.

Im folgenden werden Antriebseinheiten anhand der Zeichnung näher erläutert. Es zeigen:
- Figur 1: eine schematische Seitenansicht einer erfindungsgemäßen Antriebseinrichtung im Schnitt;
- Figur 2: eine perpektivische Darstellung eines Spindelkopfs mit mehreren erfindungsgemäßen Antriebseinheiten;
- Figur 3: eine räumliche Ansicht der Antriebseinheit gemäß Figur 1;
- Figur 4: eine schematische Seitenansicht einer Antriebseinrichtung im Schnitt, welche Einrichtung nicht unter den Gegenstand der Ansprüche fällt;
- Figur 5: eine perspektivische Darstellung eines Spindelkopfs mit mehreren Antriebseinheiten gemäß Figur 4, und
- Figur 6: eine schematische Seitenansicht eines Spindelkopfs mit zwei Antriebseinheiten gemäß Figur 4 im Schnitt.

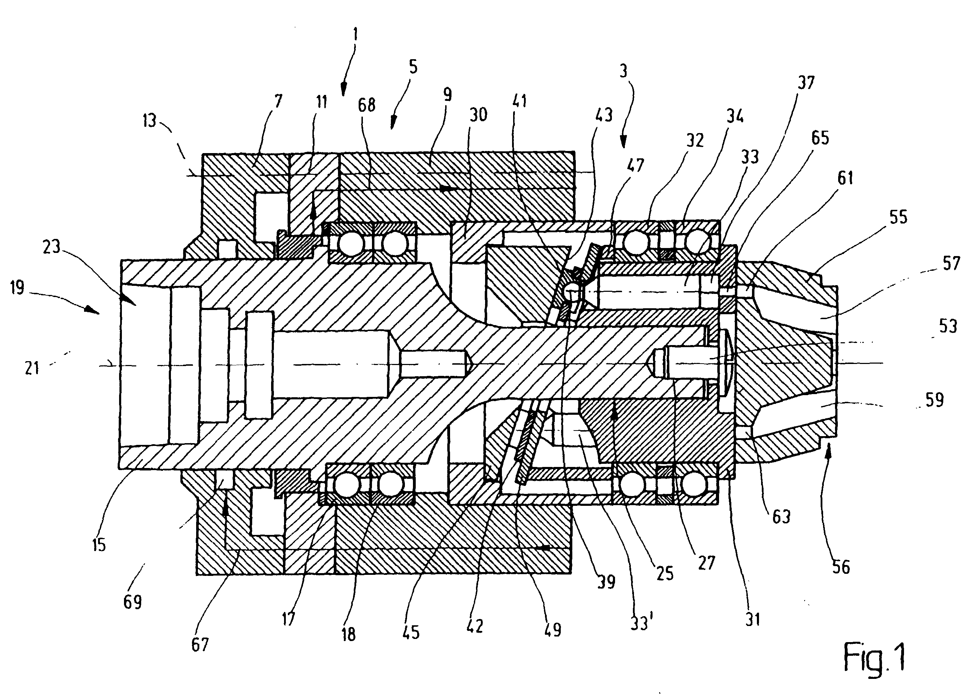

Figur 1 zeigt eine geschnittene Seitenansicht einer Antriebseinheit 1 einer Werkzeugmaschine, die von einer Antriebseinrichtung 3 und einem Spindelgehäuse 5 gebildet ist. Das Spindelgehäuse 5 weist ein deckelartiges erstes Gehäuseteil 7 und ein blockartiges zweites Gehäuseteil 9 auf. Die Gehäuseteile 7 und 9 werden mit einer zwischen ihnen angeordneten Zwischenplatte 11 mittels mehrerer Befestigungsschrauben miteinander verbunden. Aufgrund der besseren Übersichtlichkeit sind die Befestigungsschrauben hier nicht dargestellt, wobei eine strichpunktierte Linie 13 ihren Verlauf beziehungsweise ihre Positionierung im Spindelgehäuse 5 andeutet. Es ist auch möglich, das Spindelgehäuse 5 einstückig auszubilden, wodurch der Fertigungsaufwand zur Herstellung des Spindelgehäuses reduziert ist.

In dem zweiten Gehäuseteil 9 des Spindelgehäuses 5 ist eine Spindelwelle 15 drehbar von zwei hier als Wälzlager ausgebildeten und gemeinsam vorgespannten Lagern 17 und 18 gehalten. Die Spindelwelle 15 ist einstückig mit einer Werkzeugaufnahme 19 ausgebildet, von der hier lediglich mehrere konzentrisch zur Mittelachse 21 angeordnete Innenformen 23 dargestellt sind, die unterschiedliche Durchmesser aufweisen. In die Spindelwelle kann jede beliebige Werkzeugaufnahmeform und -kontur eingearbeit oder bei der Herstellung der Spindelwelle ausgeformt werden. In die Werkzeugaufnahme können Werkzeuge unmittelbar eingebracht und befestigt werden. Vorzugsweise ist die Werkzeugaufnahme so ausgebildet, daß in sie eine zumindest ein Werkzeug tragende Adaptereinrichtung einbringbar, insbesondere einsteckbar, ist, wodurch ein Werkzeugwechsel an der Antriebseinheit sehr schnell durchgeführt werden kann. Die Spindelwelle 15 weist auf ihrem der Werkzeugaufnahme 19 abgewandten Ende eine Verjüngung 25 mit einer zur Mittelachse 21 fluchtenden Gewindebohrung 27 auf.

Die Antriebseinrichtung 3 ist hier als Taumelscheibenmaschine ausgebildet und umfaßt ein hülsenförmiges Motorgehäuse 30, das teilweise in das zweite Gehäuseteil 9 des Spindelgehäuses 5 hineinragt und dort fixiert und gehalten ist. In das Motorgehäuse 30 ragt ein Zylinderblock 31, der von zwei Lagern 32 und 34 drehbar gelagert ist, die gemeinsam vorgespannt sind. Der Zylinderblock 31 weist eine Innenbohrung auf, in der die Verjüngung 25 der Spindelwelle 15, insbesondere mittels einer Preßpassung oder Preßverzahnung, drehfest gehalten ist. Die Spindelwelle 15 ist also mit dem Zylinderblock 31 spielfrei verbunden. Eine durch eine Ausnehmung im Zylinderblock 31 hindurchgreifende Befestigungsschraube 53 wird in die Gewindebohrung 27 eingeschraubt und dient zur Aufnahme von an der Spindelwelle 15 in axialer Richtung auftretenden beziehungsweise angreifenden Kräften, wodurch die Spindelwelle fixiert und sicher gehalten ist.

In den Zylinderblock 31 sind mehrere parallel zur Mittelachse 21 verlaufende Bohrungen eingebracht, in denen jeweils ein Kolben, vorzugsweise mit einem Spiel von in etwa 1/100 mm, geführt ist. In dem in Figur 1 gezeigten Ausführungsbeispiel sind neun Kolben im Zylinderblock angeordnet. Es ist möglich, die Anzahl der Kolben zu variieren, beispielsweise 7, 9, 11, 13 und so weiter, wobei eine höhere Anzahl an Kolben den Gleichlauf verbessert und die Baugröße der Verdrängermaschine reduziert. Die Bohrungen liegen in einem Winkelbereich beabstandet zueinander auf einer gedachten, zur Mittelachse 21 konzentrischen, Kreisbahn. In der in Figur 1 gezeigten Schnittebene sind hier lediglich der in der Bohrung 37 geführte Kolben 33 und der Kolben 33' erkennbar. Der Kolben 33 ist in der dargestellten Position etwa im Bereich des oberen Totpunkts angeordnet, das heißt der Kolben 33 ist fast vollständig in die Bohrung 37 eingefahren. Der Kolben 33' ist momentan im Bereich des unteren Totpunkts, also in einer in etwa vollständig ausgefahrenen Position. Aufgrund der Gleichheit der Kolben und der Bohrungen wird im folgenden lediglich auf die Ausbildung und Kinematik des Kolbens 33 eingegangen.

Der Kolben 33 weist auf seinem lagerseitigen Ende ein kugelförmiges Gelenk 39 auf, das in einem Gleitschuh 41 gelagert ist. Das Gelenk 39 durchgreift Ausnehmungen in einer Lagerplatte 49, einer Winkelhülse 47 und einer Lochplatte 42. Der Gleitschuh 41 stützt sich an einer als schiefen Ebene ausgebildeten Gleitfläche 43 eines hier feststehenden Winkelblocks 45 ab. Die Gleitfläche 43 verläuft unter einem Winkel zu einer gedachten Vertikalen und begrenzt den Hub der Kolben.

An der aus dem Spindelgehäuse 5 ragenden Stirnseite des Zylinderblocks 31 liegt eine Steuerscheibe 55 an, die von einem Einlaßkanal 57 und einem Auslaßkanal 59 durchdrungen ist. Der Einlaßkanal 57 ist an einem Hydraulikölzulauf angeschlossen und wird von dem unter Hochdruck stehenden Hydrauliköl durchströmt. Auf der an dem Zylinderblock 31 anliegenden Seite der Steuerscheibe 55 strömt das Öl durch eine ringnutartige, in Form einer Niere ausgebildeten Ausnehmung 61 aus der Steuerscheibe 55 heraus und durch eine in der Bohrung 37 mündenden Öffnung 65 in den Zylinderblock ein. Der in Figur 1 in seiner eingefahrenen Position dargestellte Kolben 33 wird daraufhin herausgedrückt, führt also eine Ausfahrbewegung aus, wodurch der Gleitschuh 41 entlang der schiefen Ebene (Gleitfläche 43) des Winkelblocks 45 in Bewegung versetzt wird, was zu einer Drehbewegung des Zylinderblocks 31 und somit der Spindelwelle 15 führt. Der zwischen der Lochplatte 42 und der Gleitfläche 43 des Winkelblocks 45 angeordnete Gleitschuh 41 gleitet auf der schiefen Ebene in Richtung des hier unteren Totpunkts der Taumelscheibenmaschine, wobei ständig über die ringnutartige Ausnehmung 61 Hydrauliköl in die Bohrung 37 einströmt. Die Ausnehmung 61 endet -in Drehrichtung des Zylinderblocks 31 gesehen- vor Erreichen des unteren Totpunkts. Nach Durchlaufen des unteren Totpunkts wird der durch die Gleitfläche 43 geführte Kolben 33 wieder in den Zylinderblock 31 eingeschoben, wobei das in der Bohrung 37 befindliche Hyrauliköl durch eine ringnutartige, nierenförmige Ausnehmung 63 in der Steuerscheibe 55 abströmen kann und durch den Auslaßkanal 59 dem Ölkreislauf wieder zugeführt wird. Aufgrund der Drehbewegung des Zylindersblocks 31 wird die damit fest verbundene Spindelwelle 15 in Drehung versetzt, wobei das übertragene Drehmoment und die Drehzahl den für die Bearbeitung eines Werkzeuges gestellten Anforderungen durch den Volumenstrom und den Druck des Hydrauliköls sowie durch die baulichen Maße der Antriebseinrichtung einstellbar sind.

Die Ausnehmungen 61 und 63 erstrecken sich jeweils über einen Winkelbereich von vorzugsweise nicht ganz 180°, wobei sie derart angeordnet sind, daß im oberen und im unteren Totpunkt eine Trennung der Hochdruckseite von der Nierderdruckseite der Verdrängermaschine realisiert ist.

Eine Drehrichtungsumkehr des Zylinderblocks 31 und somit der Spindelwelle 15 ist auf einfache Weise dadurch möglich, daß der Auslaßkanal 59 der feststehenden Steuerscheibe mit dem unter Hochdruck stehenden Hydrauliköl beaufschlagt wird, also als Einlaßkanal dient, und der Einlaßkanal 57 der Steuerscheibe 55 als Auslaßkanal fungiert. Der konstruktive Aufbau der Verdrängermaschine ermöglicht also mit sehr einfachen Mitteln eine Drehrichtungsänderung der Spindelwelle. Eine Drehrichtungsumkehr kann auch dadurch realisiert werden, daß anstelle des Winkelblocks eine verschwenkbar gelagerte Taumelscheibe in der Verdrängermaschine angeordnet ist, die -wie der Winkelblock 45- eine im Winkel zu einer gedachten Vertikalen angeordneten, als schiefe Ebene ausgebildete Gleitfläche 43 aufweist. Das Verschwenken der Taumelscheibe erfolgt derart, daß der Verlauf der als schiefe Ebene ausgebildeten Gleitfläche 43 umgekehrt wird, das heißt, weist die schiefe Ebene einen ansteigenden Verlauf auf, so wird dieser durch das Verschwenken der Taumelscheibe umgekehrt, so daß diese anschließend einen abfallenden Verlauf aufweist. Die Neigung zur Vertikalen ist also umgekehrt. Der Einlaßkanal und der Auslaßkanal müssen nicht vertauscht und können also beibehalten werden, so daß nur ein quasi hineinbeziehungsweise umschwenken der Gleitfläche eine Drehrichtungsänderung des Zylinderblocks bewirkt.

In dem Spindelgehäuse 5 der Antriebseinheit 1 ist schematisch eine als Schmiermittelzufuhr für das in der Werkzeugaufnahme 19 befindliche Werkzeug dienende Bohrung 67 dargestellt. Die durch das zweite Gehäuseteil 9, die Zwischenplatte 11 und das erste Gehäusteil 7 verlaufende Bohrung 67 mündet in einer in dem Gehäuseteil 7 angeordneten Ringnut 69 und schmiert und kühlt das Werkzeug durch eine mit der Ringnut 69 in Fluidverbindung stehenden -hier nicht dargestellten- und in der Spindelwelle angeordneten Ausnehmung oder Bohrung.

Aus Figur 1 geht eine weitere Bohrung 68 hervor, die zwischen einer aus mehreren Teilen bestehenden, lediglich schematisch dargestellten Wellendichtung und dem Lager 17 in der Zwischenplatte 11 entspringt und durch die das Leckageöl abgeführt und aus dem Spindelgehäuse ausgebracht wird. Das Leckageöl fließt zwischen dem Zylinderblock und den Kolben sowie zwischen den Gleitschuhen und dem Winkelblock heraus und gelangt so über die Lager 17 und 18 in den Bereich der Bohrung 68. Ein weiterer Bereich, in dem Leckageöl fließt, ist zwischen dem Zylinderblock 31 und der Steuerscheibe 55. Das Leckageöl dient zur Schmierung und Kühlung aller beweglichen Teile, aufgrund dessen auf aufwendige Kühl- und Schmiereinrichtungen verzichtet werden kann. Das Arbeitsmedium Hyrauliköl weist also eine mehrfache Funktion auf.

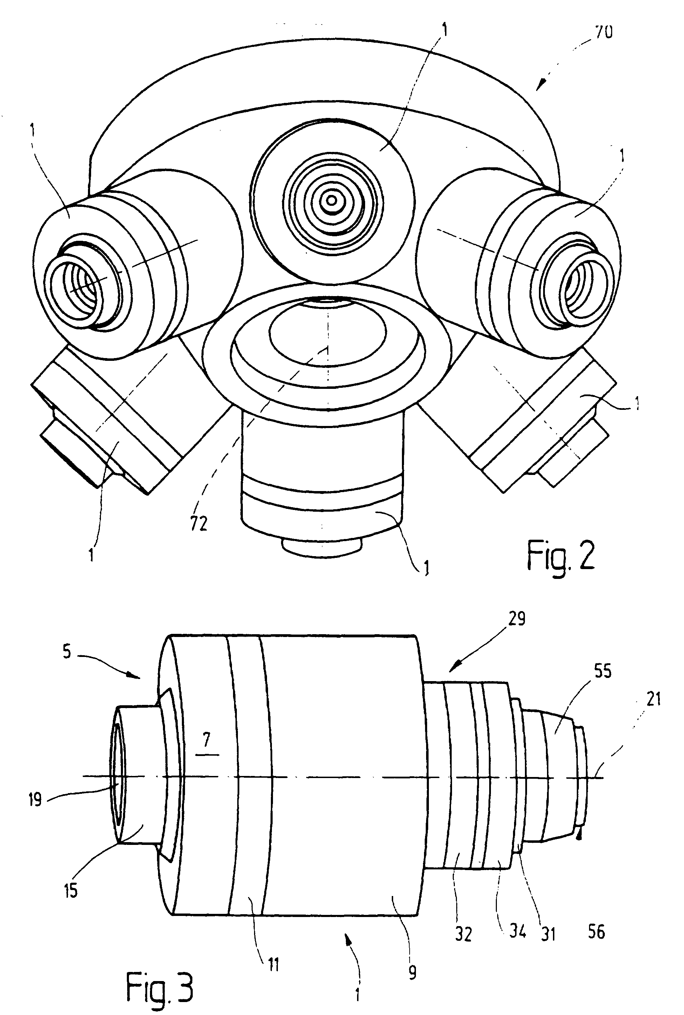

Figur 2 zeigt eine perpektivische Ansicht eines Spindelkopfs 70, an dem hier sechs Antriebseinheiten 1 angeordnet sind. Der Spindelkopf 70 weist einen kegelstumpfförmigen Mantel auf, in dem Antriebseinheiten 1 aufnehmende Lageröffnungen (Ausnehmungen) eingebracht sind. Der Spindelkopf 70 ist um die in Figur 2 mit dem Bezugszeichen 72 versehene Achse drehbar gelagert. Zur Bearbeitung eines Werkstücks kann jede der Antriebseinheiten 1 in eine Arbeitsposition gebracht werden, in der das jeweilige Werkzeug eine definierte Position bezüglich dem zu bearbeitenden Werkstück einnimmt.

Figur 3 zeigt eine perspektivische Ansicht einer Antriebseinheit 1, deren zylindrischer Körper eine etwa geschlossene Oberfläche aufweist. Die an der Stirnseite des Zylinderblocks 31 anstehende Steuerscheibe 55 ist derart an der Antriebseinheit 1 angeordnet, daß die sich annähernd über einen Winkelbereich von 180° erstreckenden, nierenartigen Ausnehmungen 61 und 63 bezüglich der maximalen Einfahr- und Ausfahrbewegung des Kolbens 33 so ausgerichtet sind, daß eine Trennung des Hoch- und Niederdruckbereichs der Verdrängermaschine gegeben ist. An einem Ringbund 56 der Steuerscheibe 55 ist eine hier nicht dargestellte Feder, insbesondere ein Tellerfederpaket, angeordnet, auf dessen Funktion nachstehend noch eingegangen wird.

Die Antriebseinheit 1 wird mit der Antriebseinrichtung 3 beziehungsweise mit der Steuerscheibe 55 voran in eine entsprechende Ausnehmung des Spindelkopfs 70 eingeführt. Dabei stützt sich das an dem Ringbund 56 angeordnete Tellerfedernpaket in der Ausnehmung an dem Spindelkopf ab, wodurch das Federpaket zusammengedrückt wird. Durch das Zusammendrücken der Tellerfedern wird die Steuerscheibe 55 mit definierter Kraft an den Zylinderblock 31 angepreßt, wodurch die beiden Lager 32 und 34 des Zylinderblocks vorgespannt werden. Die Steuerscheibe 55 wird so in die Ausnehmung des Spindelkopfs 70 gebracht, damit der in der die Antriebseinheit aufnehmenden Ausnehmung mündende Hochdruckanschluß (Zulauf) und der Niederdruckanschluß (Ablauf) mit dem Einlaßkanal 57 beziehungsweise dem Auslaßkanal 59 der Steuerscheibe 55 zumindest teilsweise überdecken, so daß eine Fluidverbindung geschaffen ist. Das zwischen der Steuerscheibe und dem Zylinderblock austretende Leckageöl gelangt über die die Antriebseinheit 1 aufnehmende Ausnehmung in den Spindelkopf 70, wodurch dieser geschmiert und gekühlt wird.

Das an der Spindelwelle 15 wirkende Drehmoment kann über die Größe der Motorbauteile der Verdrängermaschine eingestellt werden. So sind im wesentlichen der Winkelblock 45, der das Füllvolumen der Kolbenbohrungen bestimmt, und die Größe des Zylinderblocks 31 sowie der Kolben wesentlich für die Größe des Antriebsmoments verantwortlich. Das Antriebsmoment kann ebenfalls über den Druck des in den Zylinderblock 1 strömenden Hydrauliköls beeinflußt werden. Durch eine entsprechende Regelung, beispielsweise mittels einer Drossel, kann im Zulauf/Ablauf des Hydrauliköls bei einer gegebenen Last praktisch jede beliebige Drehzahl realisiert werden. Unterschiedliche Baugrößen der Antriebseinheit beziehungsweise der Verdrängermaschine können jeweils für besonders große Drehmomente bei kleinen Drehzahlen oder besonders hohen Drehzahlen bei kleinen Drehmomenten ausgeführt werden. Weiterhin ist es möglich, über einen Steuerkolben den Winkel des Winkelblocks zu verändern, um je nach Wunsch ein höheres Drehmoment oder eine höhere Drehzahl bei gleichbleibendem Druck und Volumenstrom zu realisieren.

Die Materialien der einzelnen Bauteile der Antriebseinheit sind so gewählt, daß bei einer auftretenden Störung während der Bearbeitung eines Werkstücks, beispielsweise durch einen Programmierfehler der Werkzeugmaschine, ein Schaden an der Spindelwelle praktisch ausgeschlossen werden kann. Die dabei auftretenden Kräfte werden über die Lager 17 und 18 in das robuste Spindelgehäuse und von diesem in den Spindelkopf abgeleitet. Tritt dennoch ein Schaden an einer der Antriebseinheiten des Spindelkopfs auf, so kann die betroffene Antriebseinheit innerhalb kurzer Zeit schnell und ohne Einpassarbeiten und/oder Ausbau des gesamten Spindelkopfs ausgewechselt werden.

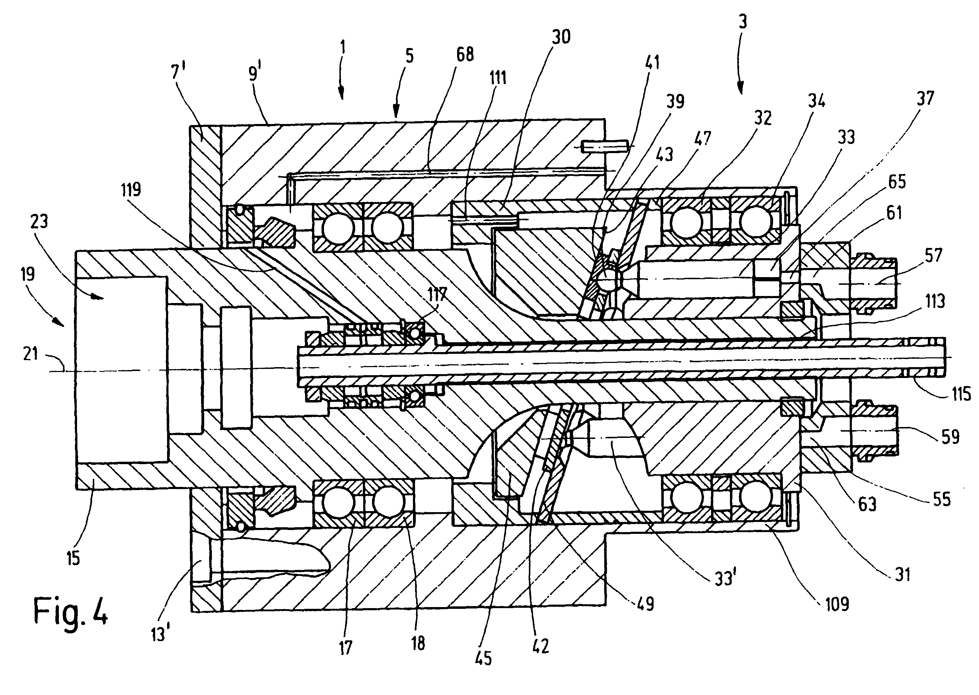

Figur 4 zeigt eine Antriebseinheit 1 einer Werkzeugmaschine. Sie entspricht im wesentlichen der Antriebseinheit gemäß Figur 1, so daß auf eine nochmalige Beschreibung der mit gleichen Bezugszeichen gekennzeichneten Teile verzichtet wird; aber sie fällt nicht unter den Gegenstand der Ansprüche.

Das Spindelgehäuse 5 weist ein als Deckelplatte ausgebildetes erstes Gehäuseteil 7' und ein zweites zylindrisches Gehäuseteil 9' auf. Die beiden Gehäuseteile 7' und 9' werden -im Gegensatz zu dem Ausführungsbeispiel gemäß Figur 1- direkt mittels mehrerer Befestigungsschrauben, von denen der besseren Übersichtlichkeit wegen lediglich eine Befestigungsschraube 13' dargestellt ist, miteinander verbunden.

Im Gegensatz zu dem Ausführungsbeispiel gemäß Figur 1 weist das zweite Gehäuseteil 9' eine sich in Längsrichtung erstreckende Verlängerung 109 mit vermindertem Außendurchmesser auf. Die Verlängerung 109 umgibt die Antriebseinrichtung 3 und stützt insbesondere die beiden Lager 32 und 34.

In die der Werkzeugaufnahme 19 zugewandte Stirnseite des hülsenförmigen Motorgehäuses 30 ist eine Bohrung 111 eingebracht. Sie sorgt für eine Fluidverbindung zwischen der Antriebseinrichtung 3 und den Lagern 17 und 18 des Spindelgehäuses 5.

In die Spindelwelle 15 ist eine diese durchgreifende konzentrisch zur Mittelachse 21 angeordnete Bohrung 113 eingebracht. In diese Bohrung 113 ist ein rohrförmiger Anschlußkanal 115 eingesteckt. Er ist an seinem der Werkzeugaufnahme 19 zugeordneten Ende über Lager 117 in der Innenform 23 gelagert, während das andere Ende des Anschlußkanals 115 die Steuerscheibe 55 durchgreift. Die Lagerung des Anschlußkanals 115 in der Spindelwelle 15 erfolgt so, daß eine Rotation der Spindelwelle bei feststehendem Anschlußkanal 115 möglich ist.

Figur 4 läßt noch erkennen, daß in der Spindelwelle 15 ein Kanal 119 vorgesehen ist, der schräg zur Längsachse 21 verläuft und eine Fluidverbindung zwischen dem Bereich des Lagers 117 und dem Bereich der beiden Lager 17 und 18 schafft. Selbstverständlich ist dieser Bereich des Lagers 117 zu der Werkzeugaufnahme 19 hin abgedichtet.

Die Funktion dieser Antriebseinheit 1 entspricht derjenigen der Antriebseinheit gemäß Figur 1, so daß auf eine nochmalige Beschreibung verzichtet wird.

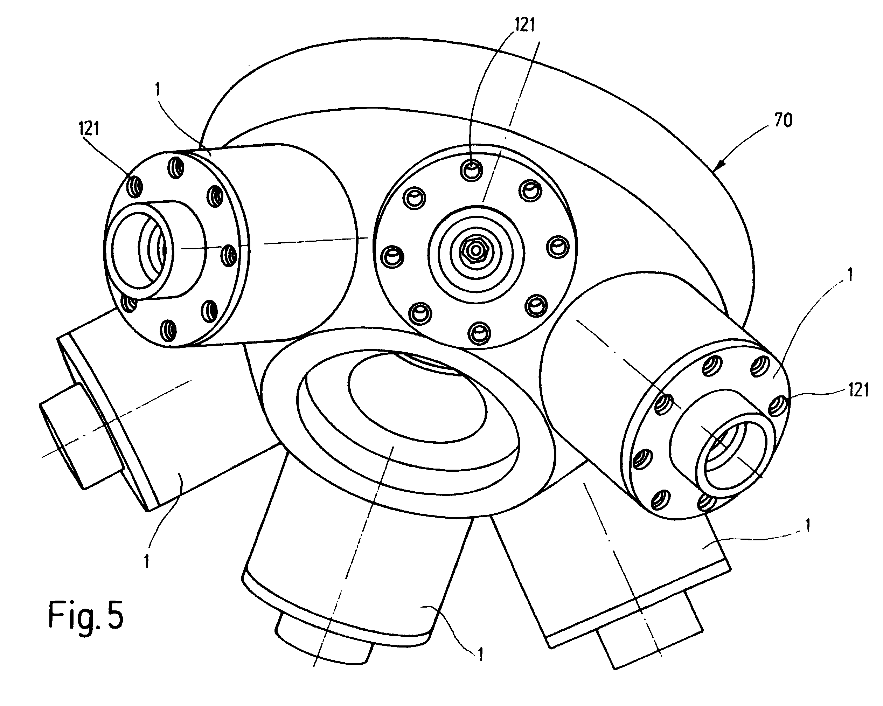

Figur 5 zeigt eine perspektivische Ansicht eines Spindelkopfs 70, an dem hier sechs Antriebseinheiten 1 angeordnet sind. Er entspricht im wesentlichen dem bereits im Zusammenhang mit Figur 2 beschriebenen Spindelkopf. Der wesentliche Unterschied besteht darin, daß die Antriebseinheiten 1 an ihren den jeweiligen Werkzeugaufnahmen zugewandten Stirnseiten Bohrungen 121 aufweisen. Es sind acht Bohrungen 121 in gleichmäßigen Abständen zueinander auf einer gedachten Kreislinie um die Längsachse der Antriebseinheit 1 angeordnet.

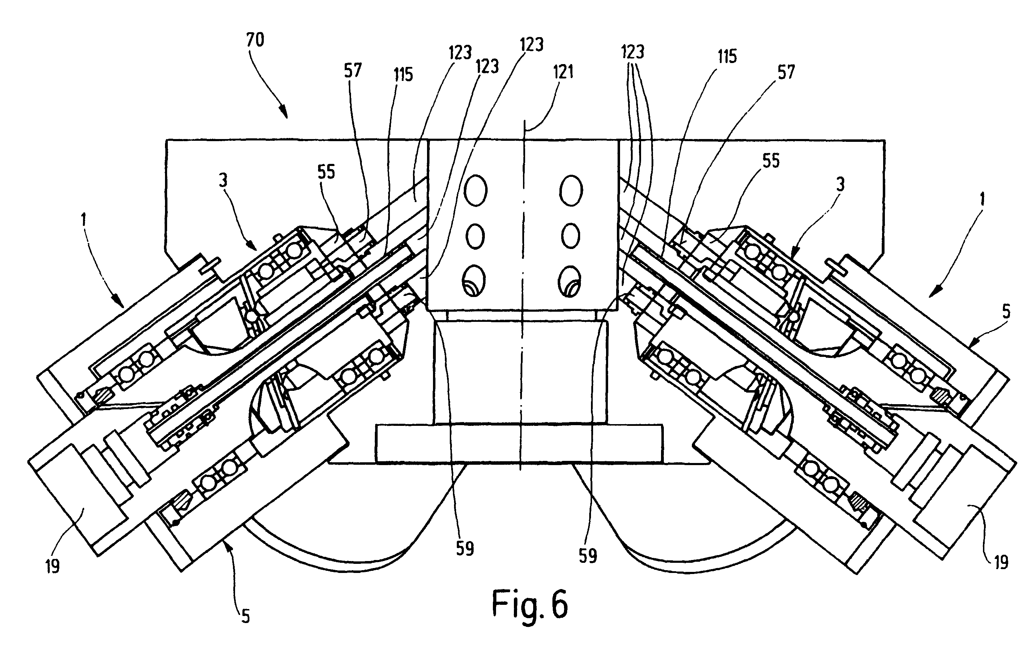

In Figur 6 ist in schematischer Seitenansicht ein Spindelkopf 70 mit zwei Antriebseinheiten 1 im Schnitt dargestellt. Die beiden Antriebseinheiten 1 entsprechen der in Figur 4 gezeigten Antriebseinheit. Es ist zu erkennen, daß im Spindelkopf 70 jeweils schräg zu einer Achse 121 verlaufende Kanäle 123 vorgesehen sind, die mit dem Einlaßkanal 57, dem Auslaßkanal 59 beziehungsweise dem Anschlußkanal 115 kommunizieren. Sie schaffen eine Verbindung mit im Spindelkopf 70 zentral verlaufenden in der Figur nicht gezeigten Versorgungskanälen.

## Patentansprüche

1. Werkzeugmaschine zur Bearbeitung von Werkstücken mit Werkzeugen, mit einem eine Spindelwelle (15) aufweisenden, mindestens ein Werkzeug aufnehmenden Spindelgehäuse (5) und mit einer eine Drehbewegung der Spindelwelle bewirkenden Antriebseinrichtung (3), die eine hydraulisch betriebene Verdrängermaschine umfaßt, **dadurch gekennzeichnet, daß** die Werkzeugmaschine ein einziges Arbeitsmedium-Kreislauf- bzw. Leitungssystem aufweist und daß das Arbeitsmedium der Verdrängermaschine, vorzugsweise Hydrauliköl, außer zum Antrieb auch zur Schmierung und Kühlung von in dem Spindelgehäuse (5) angeordneten beweglichen Teilen verwendet wird, und daß das Arbeitsmedium zur Schmierung und Kühlung eines in einer Werkzeugaufnahme (19) befindlichen Werkzeugs eingesetzt ist, wobei die Zuführung des Arbeitsmediums über eine Bohrung (67), eine im Gehäuseteil (7) angeordnete Ringnut (69) und eine mit der Ringnut (69) in Fluidverbindung stehende und in der Spindelwelle (15) angeordnete Ausnehmung oder Bohrung erfolgt.

2. Werkzeugmaschine nach Anspruch 1, **dadurch gekennzeichnet, daß** die Antriebseinrichtung (3) ausschließlich durch die Verdrängermaschine gebildet wird.

3. Werkzeugmaschine nach Anspruch 1 oder 2, **dadurch gekennzeichnet, daß** die Antriebseinrichtung (3) als Axialkolbenmaschine, insbesondere Taumelscheibenmaschine, ausgebildet ist.

4. Werkzeugmaschine nach einem der vorhergehenden Ansprüche, **dadurch gekennzeichnet, daß** die Antriebseinrichtung (3) und das Spindelgehäuse (5) eine Antriebseinheit (1) bilden.

5. Werkzeugmaschine nach einem der vorhergehenden Ansprüche, **dadurch gekennzeichnet, daß** das Verdrängervolumen der Verdrängermaschine einstellbar ist.

6. Werkzeugmaschine nach einem der vorhergehenden Ansprüche, **dadurch gekennzeichnet, daß** die Antriebsdrehzahl und das Antriebsmoment durch Einstellung des Verdrängervolumens der Verdrängermaschine und/oder durch Beeinflussung des Volumenstroms und/oder des Drucks des in die hydraulische Maschine eingeleiteten Arbeitsmediums einstellbar sind.

7. Werkzeugmaschine nach einem der vorhergehenden Ansprüche, **dadurch gekennzeichnet, daß** die Spindelwelle (15) die Werkzeugaufnahme (19) aufweist.

8. Werkzeugmaschine nach einem der vorhergehenden Ansprüche, **dadurch gekennzeichnet, daß** die Werkzeugaufnahme (19) und die Spindelwelle (15) einstückig ausgebildet sind.

9. Werkzeugmaschine nach einem der vorhergehenden Ansprüche, **dadurch gekennzeichnet, daß** die Antriebseinheit (1) in einen mehrere Antriebseinheiten tragenden Spindelkopf (70) einsetzbar ist.

## Claims

1. Machine tool for machining work pieces using tools, having a spindle casing (5), which has a spindle shaft (15) and receives at least one tool, and having a drive device (3), which effects a rotary movement of the spindle shaft and comprises a hydraulically operated displacement machine, **characterized in that** the machine tool has a single working-medium circuit or system of lines, and **in that** the working medium of the displacement machine, preferably hydraulic oil, as well as for driving purposes is also used to lubricate and cool moving parts arranged in the spindle casing (5), and **in that** the working medium is used to lubricate and cool a tool which is situated in a tool mount (19), the working medium being supplied via a bore (67), an annular groove (69) arranged in the casing part (7) and a recess or bore which is in fluid communication with the annular groove (69) and is arranged in the spindle shaft (15).

2. Machine tool according to Claim 1, **characterized in that** the drive device (3) is formed exclusively by the displacement machine.

3. Machine tool according to Claim 1 or 2, **characterized in that** the drive device (3) is designed as an axial piston machine, in particular a swash plate machine.

4. Machine tool according to one of the preceding claims, **characterized in that** the drive device (3) and the spindle casing (5) form a drive unit (1).

5. Machine tool according to one of the preceding claims, **characterized in that** the displacement volume of the displacement machine is adjustable.

6. Machine tool according to one of the preceding claims, **characterized in that** the rotational drive speed and the driving moment can be adjusted by adjusting the displacement volume of the displacement machine and/or by influencing the volumetric flow rate and/or the pressure of the working medium introduced into the hydraulic machine.

7. Machine tool according to one of the preceding claims, **characterized in that** the spindle shaft (15) has the tool mount (19).

8. Machine tool according to one of the preceding claims, **characterized in that** the tool mount (19) and the spindle shaft (15) are formed integrally.

9. Machine tool according to one of the preceding claims, **characterized in that** the drive unit (1) can be inserted into a spindle head (70) which bears a plurality of drive units.

## Revendications

1. Machine-outil pour le traitement de pièces à usiner avec des outils, équipé d'un boîtier de broche (5) présentant au moins un arbre de broche (15) et recevant au moins un outil et d'un dispositif d'entraînement (3) provoquant une rotation de l'arbre de broche, le dispositif comprenant une machine volumétrique à entraînement hydraulique, **caractérisée en ce que** la machine-outil présente une seule boucle ou un seul circuit de fluide moteur, et **en ce que** le fluide moteur de la machine volumétrique est de préférence de l'huile hydraulique utilisée en plus de l'entraînement aussi pour la lubrification et le refroidissement des pièces mobiles disposées dans le boîtier de broche (5), et **en ce que** le fluide moteur est mis en oeuvre pour la lubrification et le refroidissement d'un outil qui se trouve dans un logement d'outil (19), l'alimentation du fluide moteur étant effectuée à travers un alésage (67), une rainure annulaire (69) disposée dans une partie de boîtier (7) et un creux ou alésage qui se trouve en connexion fluidique avec la rainure annulaire (69) et est disposé dans l'arbre de broche (15).

2. Machine-outil selon la revendication 1, **caractérisée en ce que** le dispositif d'entraînement (3) est réalisé exclusivement par la machine volumétrique.

3. Machine-outil selon la revendication 1 ou 2, **caractérisée en ce que** le dispositif d'entraînement (3) est réalisé comme une machine à piston axial, en particulier une machine à plateau oscillant.

4. Machine-outil selon l'une quelconque des revendications précédentes, **caractérisée en ce que** le dispositif d'entraînement (3) et le boîtier de broche (5) forment une unité d'entraînement (1).

5. Machine-outil selon l'une quelconque des revendications précédentes, **caractérisée en ce que** la capacité du piston de la machine volumétrique est réglable.

6. Machine-outil selon l'une quelconque des revendications précédentes, **caractérisée en ce que** la vitesse de rotation d'entraînement et le couple d'entraînement sont réglables par le réglage de la capacité du piston de la machine volumétrique et/ou en influençant le courant volumétrique et/ou la pression du fluide moteur introduit dans la machine hydraulique.

7. Machine-outil selon l'une quelconque des revendications précédentes, **caractérisée en ce que** l'arbre de broche (15) présente le logement d'outil (19).

8. Machine-outil selon l'une quelconque des revendications précédentes, **caractérisée en ce que** le logement d'outil (19) et l'arbre de broche (15) sont réalisés d'une seule pièce.

9. Machine-outil selon l'une quelconque des revendications précédentes, **caractérisée en ce que** l'unité d'entraînement (1) peut être insérée dans une tête de broche (70) supportant plusieurs unités d'entraînement.
